# EUROPEAN PATENT APPLICATION

(11) **EP 3 961 322 A1**
(43) Date of publication of application: **02.03.2022**
(21) Application number: 20796185.5
(22) Date of filing: 20.04.2020
(51) Int. Cl.: G05B 19/4069, B24B 5/04, B24B 51/00, G05B 19/4155

(54) **CYBER-PHYSICAL SYSTEM TYPE MACHINING SYSTEM**

(30) Priority: 22.04.2019 JP 2019081193
(71) Applicant: JTEKT Corporation, Kariya-shi Aichi-ken, 448-8652 (JP)
(72) Inventor: WAKAZONO, Yoshio, Osaka-shi, Osaka 542-8502 (JP); MURAKAMI, Shinji, Osaka-shi, Osaka 542-8502 (JP)
(74) Representative: TBK
(86) International application number: PCT/JP2020/017091
(87) International publication number: WO 2020/218257

(57) **Abstract**

A cyber-physical system type machining system comprising: a machine tool equipped with a grinding machine and a control device; and a computer device for generating, in a virtual world, a virtual machining phenomenon corresponding to an actual machining phenomenon with regard to a workpiece and the grinding machine. The computer device is connected to communicate with the control device and acquires a command value in synchronization with the control device, and the computer device is configured to generate a future virtual machining phenomenon, which is a virtual machining phenomenon in a future, on a basis of the acquired command value, and output, to the control device, an optimal command value for correcting the command value on the basis of the future virtual machining phenomenon.

## Description

### TECHNICAL FIELD

The present invention relates to a cyber-physical system type machining system.

### BACKGROUND ART

A cyber-physical system can virtually predict a phenomenon that occurs in a product or the like in the future using a model in which the product or the like disposed in a real world is reproduced in a virtual world based on digital data.

The cyber-physical system can synchronize a state of a product or the like with a state of a model virtually created in a cyber world. Therefore, the cyber-physical system can simulate a phenomenon occurring in the product or the like with high accuracy.

On the other hand, a grinding simulation apparatus disclosed in JP-A-2018-153907 executes a grinding simulation based on an ideal machining phenomenon set in advance, without reflecting actual machining phenomena of a machine body, a workpiece or the like that change from moment to moment due to grinding in the real world. Therefore, it may be difficult to accurately simulate an actual machining phenomenon that actually occurs in a grinding machine or a workpiece in the real world.

In the field of machine tools, it is desired that mass-produced workpieces have uniform dimensional accuracy and properties. Therefore, in the field of machine tools, it is extremely important to improve the machining accuracy of the workpieces by more accurately predicting an actual machining phenomenon that deteriorates the dimensional accuracy and properties of the workpieces in machining.

### SUMMARY OF INVENTION

An embodiment of the present invention relates to a cyber-physical system type machining system that accurately generates, in a virtual world, an actual machining phenomenon occurring in a machine tool and a workpiece in a real world to improve the machining accuracy of the workpiece machined by the machine tool.

### SOLUTION TO PROBLEM

According to an embodiment of the present invention, a cyber-physical system type machining system includes: a machine tool disposed in a real world, the machine tool including a machine body configured to machine a workpiece and a control device configured to control the machine body based on a command value; and a computer device configured to generate, in a virtual world, a virtual machining phenomenon corresponding to an actual machining phenomenon with regard to the workpiece and the machine body. The computer device is connected to communicate with the control device of the machine tool, and acquires the command value in synchronization with the control device. Then, the computer device generates a future virtual machining phenomenon, which is a virtual machining phenomenon in the future, based on the acquired command value, and outputs, to the control device, an optimal command value for correcting the command value based on the future virtual machining phenomenon.

### BRIEF DESCRIPTION OF DRAWINGS

FIG. 1 is a configuration diagram showing a configuration of a cyber-physical system type machining system according to an embodiment of the present invention.
FIG. 2 is a configuration diagram showing a configuration of a computer device in FIG. 1.
FIG. 3 is a diagram illustrating an operation of the cyber-physical system type machining system.

### DESCRIPTION OF EMBODIMENTS

### (1. Overview of Cyber-physical System Type Machining System)

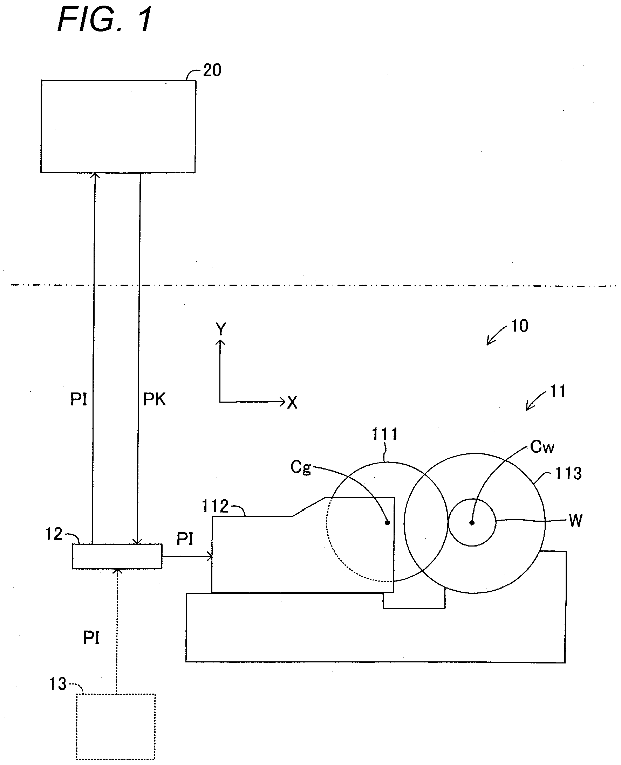

Hereinafter, a cyber-physical system (hereinafter, also simply referred to as "CPS") type machining system will be described with reference to the drawings. As shown in FIG. 1, the CPS type machining system (hereinafter, also simply referred to as "machining system") includes a grinding machine 11 of a machine body for grinding a workpiece W, a control device 12, and a computer device 20 disposed in a virtual world, and the grinding machine 11 and the control device 12 serve as a machine tool 10 disposed in a real world.

### (2. Configuration of Grinding Machine 11)

As shown in FIG. 1, the grinding machine 11 as the machine body in the real world includes a grinding wheel 111, a grinding wheel head 112, and a headstock 113. The grinding machine 11 includes a cooling device (not shown) that cools a periphery of a grinding point with a coolant. The grinding machine 11 grinds a peripheral surface of the workpiece W by bringing a peripheral surface of the grinding wheel 111 rotationally driven by the grinding wheel head 112 into contact with the peripheral surface of the workpiece W rotationally driven by the headstock 113.

The grinding wheel 111 is formed in a disc shape by a large amount of abrasive grains, and is supported by the grinding wheel head 112 so as to be rotationally driven around a grinding wheel axis Cg. The grinding wheel head 112 rotates the grinding wheel 111 around the grinding wheel axis Cg according to a command value PI from the control device 12 that controls an operation of the grinding machine 11. The grinding wheel head 112 moves the grinding wheel 111 in a grinding wheel axis Cg direction and a feeding direction (X-axis direction) according to the command value PI from the control device 12. The headstock 113 may be moved in the feeding direction (X-axis direction) with respect to the grinding wheel head 112. The headstock 113 supports the workpiece W so as to be rotatable around a main axis Cw, and rotates the workpiece W around the main axis Cw according to the command value PI from the control device 12.

The control device 12 comprehensively controls an operation of the grinding machine 11 which is the machine body, and specifically, the control device 12 controls the grinding wheel head 112 and the headstock 113 of the grinding machine 11 based on the command value PI. Here, the command value PI includes positions of the workpiece W (the headstock 113) and the grinding wheel 111 (the grinding wheel head 112), a rotation speed of the grinding wheel 111, a rotation speed and a cutting speed of a spindle (the workpiece W) of the headstock 113, a switching timing in grinding processing (rough grinding, precise grinding, and fine grinding), the presence or absence and a temperature of a coolant, a material of the workpiece W, a diameter of the workpiece W, and the like.

The command value PI also includes values (parameters) related to an actual machining phenomenon in which the grinding machine 11 actually grinds the workpiece W, and the values related to the actual machining phenomenon are various parameters necessary for generation of a current virtual machining phenomenon and a future virtual machining phenomenon which are to be described later. Here, the actual machining phenomenon includes a grinding state in which the grinding machine 11 is actually grinding a workpiece, specifically, a wear state of abrasive grains of the grinding wheel 111 or a ground state of the workpiece W (shape, surface roughness, or the like).

The control device 12 controls a relative position between the grinding wheel 111 and the workpiece W, the rotational speed of the grinding wheel 111, and the rotational speed of the workpiece W according to any machining condition, and the grinding machine 11 performs grinding on the workpiece W. Then, the control device 12 outputs the command value PI to the computer device 20. The control device 12 also acquires an optimal command value PK from a to-be-described optimal command value determination unit 26 of the computer device 20, and controls the grinding machine 11 using the acquired optimal command value PK.

### (3. Configuration of Computer Device 20)

The computer device 20 disposed in the virtual world (cyber world) includes a Central Processing Unit (CPU), a Read Only Memory (ROM), a Random Access Memory (RAM), an interface, a storage device, and the like, and is connected to the control device 12 of the grinding machine 11 in the real world via a network. Here, the computer device 20 is disposed in a cloud space to which the control device 12 can be connected via a network.

The computer device 20 acquires the command value PI from the control device 12 of the grinding machine 11 in synchronization with the control device 12, and generates, in the virtual world, a virtual machining phenomenon corresponding to the actual machining phenomenon based on the acquired command value PI. Then, the computer device 20 generates the current virtual machining phenomenon, which is a virtual machining phenomenon at present, and generates the future virtual machining phenomenon, which is a virtual machining phenomenon in the future, based on the acquired command value PI. Then, the computer device 20 outputs, to the control device 12, the optimal command value PK for correcting the command value PI based on the future virtual machining phenomenon.

Here, the current virtual machining phenomenon corresponds to an actual machining phenomenon of the grinding machine 11 which is the machine body and the workpiece W. The future virtual machining phenomenon is a phenomenon (state) that occurs in the grinding machine 11 which is the machine body and the workpiece W, in the future due to machining (grinding).

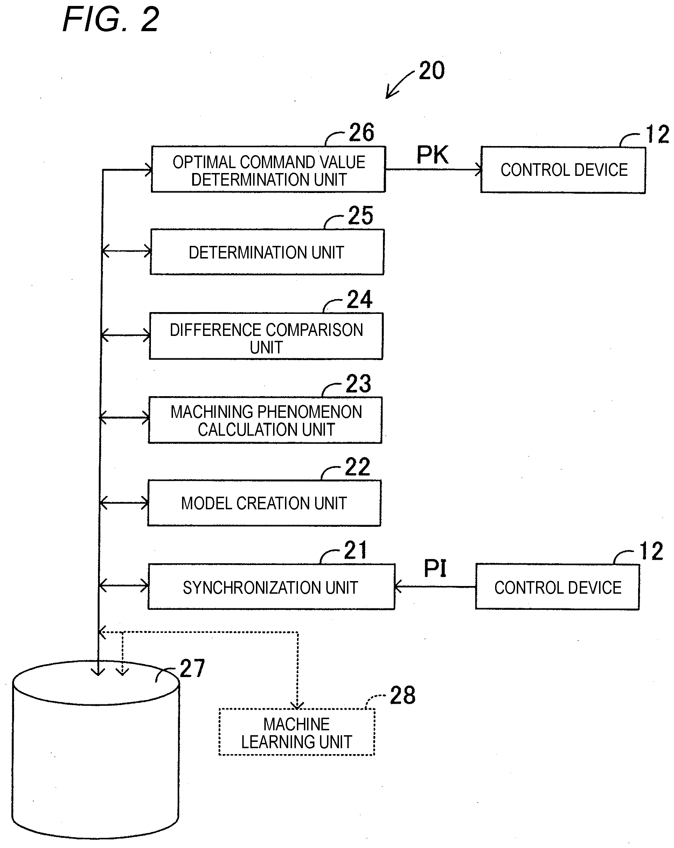

As shown in FIG. 2, the computer device 20 includes a synchronization unit 21, a model creation unit 22, a machining phenomenon calculation unit 23, a difference comparison unit 24, a determination unit 25, the optimal command value determination unit 26, and a database 27.

The synchronization unit 21 updates a previously acquired command value PIinto a current command value PI (in particular, a parameter related to the actual machining phenomenon) by acquiring the command value PIfrom the control device 12 at a predetermined cycle. Further, the synchronization unit 21 stores the command value PI, which is acquired from the control device 12, into the database 27 in an updatable manner.

The model creation unit 22 creates a model in which the grinding machine 11 and the workpiece W installed in the real world are reproduced in the virtual world. Specifically, the model creation unit 22 generates, on a computer, a virtual grinding wheel corresponding to the grinding wheel 111 of the grinding machine 11, a virtual grinding wheel head corresponding to the grinding wheel head 112, a virtual headstock corresponding to the headstock 113, and a virtual workpiece corresponding to the workpiece W.

The model creation unit 22 creates the model such that the virtual grinding wheel, the virtual grinding wheel head, the virtual headstock, and the virtual workpiece coincide in state with the grinding wheel 111, the grinding wheel head 112, the headstock 113, and the workpiece W, that is, the current virtual machining phenomenon coincides with the actual machining phenomenon. Besides the model in which the grinding machine 11 and the workpiece W are reproduced, the model creation unit 22 can also create, for example, a machine behavior model in which a machine behavior is reproduced, a static pressure control model in which a machining state of the grinding machine 11 in a static pressure state is reproduced, a measurement model in which a machining state of the grinding machine 11 is measured, and the like.

The machining phenomenon calculation unit 23 generates the future virtual machining phenomenon at any time point later than a synchronization time point at which the synchronization unit 21 synchronizes the command value PI, by calculation based on the command value PI. Alternatively, the machining phenomenon calculation unit 23 generates the future virtual machining phenomenon based on a stored command value PH which is the command value PI stored in the database 27 in an updatable manner.

Alternatively, the machining phenomenon calculation unit 23 generates, based on the command value PI synchronized by the synchronization unit 21 or the stored command value PH stored in the database 27, the current virtual machining phenomenon by operating the model reproduced by the model creation unit 22. Then, the machining phenomenon calculation unit 23 generates the future virtual machining phenomenon based on the generated current virtual machining phenomenon.

Specifically, the machining phenomenon calculation unit 23 performs calculation such as a numerical analysis and a simulation based on the command value PI or the current virtual machining phenomenon, to generate the future virtual machining phenomenon. As a result, the machining phenomenon calculation unit 23 generates the future virtual machining phenomenon reflecting an actual machining phenomenon that changes from moment to moment with regard to the grinding machine 11 and the workpiece W. Then, the machining phenomenon calculation unit 23 outputs a virtual command value PI, which is the command value PI used to generate the future virtual machining phenomenon, to the database 27 as the stored command value PH. Accordingly, the database 27 updates and stores the virtual command value PI as the stored command value PH.

The difference comparison unit 24 compares a difference between the command value PI acquired from the control device 12 and the stored command value PH stored in the database 27, that is, the virtual command value PI. Alternatively, the difference comparison unit 24 compares a difference generated between the actual machining phenomenon of the grinding machine 11 and the current virtual machining phenomenon. Then, when the difference does not satisfy a predetermined reference value as a result of the comparison performed by the difference comparison unit 24, the synchronization unit 21 synchronizes the stored command value PH with the command value PI acquired from the control device 12.

The determination unit 25 determines whether the future virtual machining phenomenon calculated by the machining phenomenon calculation unit 23 is a predetermined machining phenomenon set in advance. The future virtual machining phenomenon includes, for example, a dimension of a virtual workpiece (workpiece W) ground by grinding, the presence or absence of grinding burn or a surface roughness of the virtual workpiece (workpiece W) ground by grinding, or the like, the predetermined machining phenomenon is a reference set in advance for these, and the determination unit 25 compares the future virtual machining phenomenon with the predetermined machining phenomenon.

The optimal command value determination unit 26 determines the optimal command value PK for correcting (calibrating) the command value PI based on the future virtual machining phenomenon generated by the machining phenomenon calculation unit 23, and outputs the determined optimal command value PK to the control device 12. Specifically, when the future virtual machining phenomenon is different from the predetermined machining phenomenon as a result of the determination of the determination unit 25, the optimal command value determination unit 26 determines the optimal command value PK according to, for example, occurrence of grinding burn of the virtual workpiece (workpiece W), lives of rolling bearings of the virtual grinding wheel head (grinding wheel head 112) and the virtual headstock (headstock 113), and other abnormalities, and outputs the optimal command value PK to the control device 12.

In this case, the optimal command value determination unit 26 determines the optimal command value PK, for example, to increase the rotational speed of the virtual grinding wheel (grinding wheel 111) or to reduce the rotational speed of the virtual workpiece (workpiece W). Then, the optimal command value determination unit 26 outputs the determined optimal command value PK to the control device 12. The control device 12 increases the rotational speed of the virtual grinding wheel (grinding wheel 111) or reduces the rotational speed of the virtual workpiece (workpiece W) according to the optimal command value PK, so as to prevent occurrence of grinding burn or the like in the actual machining phenomenon. Then, the control device 12 outputs the optimal command value PK to the computer device 20 as a new command value PI, and thus the computer device 20 acquires the new command value PI and synchronizes with the grinding machine 11 in the real world.

Here, the optimal command value PK is output during next grinding of the workpiece W, for example, in a case where the optimal command value PK is related to quality of the ground workpiece W. On the other hand, for example, in a case of a mechanical abnormality of the grinding machine 11, if the abnormality is serious, the optimum command value PK is immediately output and the operation of the grinding machine 11 is stopped, and if the abnormality is light, the optimal command value PK is output during next grinding of the workpiece W.

### (4. Operation of CPS Type Machining System)

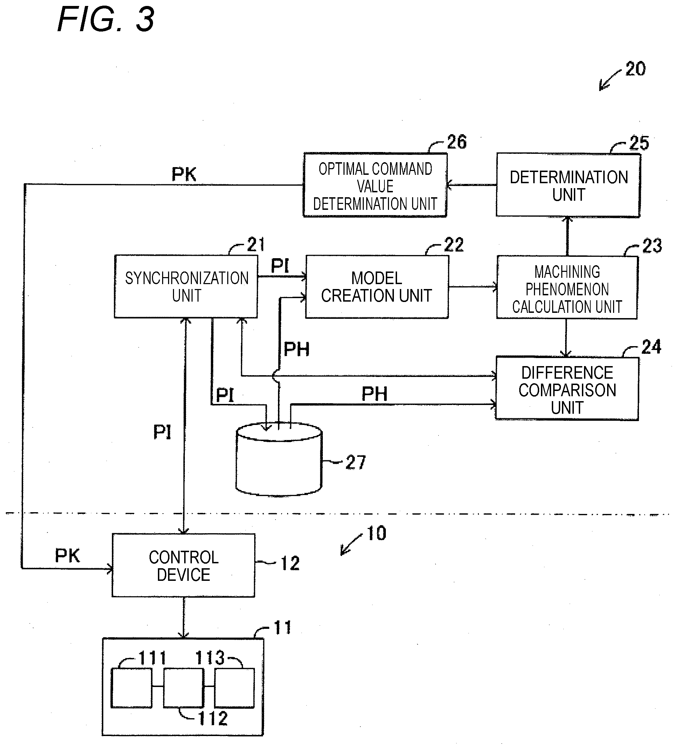

Next, an operation of the CPS type machining system including the grinding machine 11 which is the machine body and the control device 12 which are disposed in the real world, and the computer device 20 disposed in the virtual world will be described with reference to FIG. 3. In the CPS type machining system (grinding system), first, an operator inputs, as machining conditions, for example, a cutting amount for each process, a rotation speed of the grinding wheel 111, a switching timing in the grinding process, a rotation speed of the headstock 113 (workpiece W), and information on the workpiece W to the control device 12. As a result, the control device 12 generates the command value PI (NC program) and outputs the command value PI to the computer device 20 via the network. The command value PI can include various types of data related to specifications of the grinding machine 11, specifically, diameter data of the grinding wheel 111, coordinate data of the grinding wheel head 112 and the headstock 113 in an X-axis direction and a Y-axis direction, shape data of the workpiece W, or the like.

In the computer device 20, the synchronization unit 21 synchronously acquires the command value PI from the control device 12, and stores the acquired command value PI into the database 27 as the stored command value PH. In this case, the synchronization unit 21 may output the acquired command value PI to the model creation unit 22 and the machining phenomenon calculation unit 23 instead of storing the acquired command value PI into the database 27.

The model creation unit 22 generates a virtual grinding wheel, a virtual grinding wheel head, a virtual headstock, and a virtual workpiece on a computer (in a cyber space) based on the stored command value PH stored in the database 27 or the command value PI acquired from the control device 12, specifically, various types of data related to the specifications of the grinding machine 11. As a result, the model creation unit 22 creates a model having the same specifications as those of the grinding machine 11.

Then, in synchronization with the control device 12 controlling the grinding machine 11 to start grinding, the computer device 20 virtually starts grinding. Specifically, in the grinding machine 11 in the real world, the control device 12 operates the grinding wheel 111, the grinding wheel head 112, and the headstock 113 based on the command value PI to grind the workpiece W.

On the other hand, in the computer device 20, the machining phenomenon calculation unit 23 generates the actual machining phenomenon in the grinding machine 11 as the current virtual machining phenomenon based on the command value PI acquired from the control device 12 or the stored command value PH stored in the database 27. Here, the generated current virtual machining phenomenon is generated in synchronization with the actual machining phenomenon.

Then, the machining phenomenon calculation unit 23 generates the future virtual machining phenomenon based on the current virtual machining phenomenon. In this case, the machining phenomenon calculation unit 23 may generate the future virtual machining phenomenon based on the command value PI acquired from the control device 12 or the stored command value PH stored in the database 27 without generating the current virtual machining phenomenon.

The machining phenomenon calculation unit 23 generates the future virtual machining phenomenon by executing a simulation for grinding in a state where the model created by the model creation unit 22 is operated on a computer and performing numerical calculation using the command value PI. For example, the machining phenomenon calculation unit 23 simulates or numerically calculates the presence or absence of grinding burn, which is a future virtual machining phenomenon, by calculating a burn depth of the virtual workpiece (that is, the workpiece W to be ground by the grinding machine 11 that is operating synchronously).

When the machining phenomenon calculation unit 23 is executing the simulation, the grinding machine 11 in the real world is also continuously performing grinding on the workpiece W. Therefore, the synchronization unit 21 of the computer device 20 acquires the command value PI from the control device 12 at a predetermined cycle. When the database 27 stores the stored command value PH, the difference comparison unit 24 compares a difference generated between the command value PI acquired from the control device 12, that is, the actual machining phenomenon, and the stored command value PH, that is, the current virtual machining phenomenon. When the difference is larger than the predetermined reference value, the synchronization unit 21 updates the stored command value PH stored in the database 27 into the command value PI acquired from the control device 12.

As a result, the model creation unit 22 can repeatedly generate a model synchronized with the grinding machine 11, and the machining phenomenon calculation unit 23 can calculate and generate the future virtual machining phenomenon based on the current virtual machining phenomenon or command value PI synchronized with the actual machining phenomenon.

In the computer device 20, the determination unit 25 determines whether the future virtual machining phenomenon is a predetermined machining phenomenon (for example, a machining phenomenon in which grinding burn does not occur). When the determination unit 25 predicts that the future virtual machining phenomenon is not the predetermined machining phenomenon, that is, the grinding burn occurs in the future virtual machining phenomenon, the optimal command value determination unit 26 determines the optimal command value PK such that the predicted occurrence of the grinding burn is prevented.

Then, the optimal command value determination unit 26 outputs the determined optimal command value PK to the control device 12 via the network. The control device 12 acquires the optimal command value PK from the optimal command value determination unit 26 of the computer device 20. Then, the control device 12 corrects the command value PI using the optimal command value PK and controls the grinding machine 11.

Here, the machining phenomenon calculation unit 23 of the computer device 20 can also generate (predict), as the future virtual machining phenomenon, for example, a machining phenomenon, in which a chatter mark occurs in grinding or surface roughness deteriorates, by simulation or numerical calculation. Alternatively, the determination unit 25 can determine whether the future virtual machining phenomenon is the predetermined machining phenomenon, using a machining phenomenon in which a chatter mark does not occur or the surface roughness does not deteriorate as the predetermined machining phenomenon.

Accordingly, when the determination unit 25 predicts that the future virtual machining phenomenon is not the predetermined machining phenomenon, that is, the chatter mark occurs and the surface roughness deteriorates in the future virtual machining phenomenon, the optimal command value determination unit 26 determines the optimal command value PK such that the predicted occurrence of the chatter mark and deterioration of the surface roughness is prevented.

In this case, the optimal command value determination unit 26 determines, for example, the optimal command value PK for correcting the wear state of the abrasive grains of the virtual grinding wheel (grinding wheel 111) and the rotational speeds of the virtual grinding wheel head (grinding wheel head 112) and the virtual headstock (headstock 113), and outputs the optimal command value PK to the control device 12. Since there may be a mechanical abnormality when occurrence of the chatter mark and deterioration of the surface roughness is predicted, the optimal command value determination unit 26 can also output, for example, the optimal command value PK for stopping the operation of the grinding machine 11. Alternatively, when a life of a rolling bearing, which is a mechanical abnormality, is predicted, the optimal command value determination unit 26 can also output, for example, maintenance information for requesting a manufacturer of the grinding machine 11 to inspect or replace the bearing to a connected external terminal device of the manufacturer via the network.

As can be understood from the above description, according to the cyber-physical system type machining system, the computer device 20 can generate the future virtual machining phenomenon based on the command value PI acquired in synchronization with the control device 12 of the machine tool 10 disposed in the real world. Accordingly, by reflecting the actual machining phenomenon with regard to the grinding machine 11 and the workpiece W which are disposed in the real world, the computer device 20 can more accurately generate the future virtual machining phenomenon, and can more accurately predict the future virtual machining phenomenon. Then, the computer device 20 can output, to the control device 12 of the machine tool 10, the optimal command value PK for correcting the command value PI based on the generated future virtual machining phenomenon.

Accordingly, the command value PI can be corrected based on the future virtual machining phenomenon that is accurately generated (predicted). Therefore, by the control device 12 acquiring the optimum command value PK repeatedly output from the computer device 20 as a new command value PI and controlling the grinding machine 11, the machining accuracy of the workpiece W can be significantly improved, and the machine tool 10 can be operated with the command value PI being autonomously corrected.

### (5. First Modification)

In the computer device 20 of the above-described embodiment, the machining phenomenon calculation unit 23 and the determination unit 25 cooperate with each other to predict the future virtual machining phenomenon, and the optimal command value determination unit 26 determines the optimal command value PK. In addition, as indicated by a broken line in FIG. 2, when the computer device 20 includes a machine learning unit 28 and determines the optimal command value PK related to machining quality of the workpiece W, the computer device 20 may be configured to determine the optimal command value PK based on machining quality estimated by the machine learning unit 28. Hereinafter, a first modification will be described.

The machine learning unit 28 estimates the machining quality of the workpiece W based on the future virtual machining phenomenon calculated by the machining phenomenon calculation unit 23. The machine learning unit 28 learns the future virtual machining phenomenon and machining quality of the virtual workpiece as a training data set based on a known machine learning technique (specifically, a machine learning program). Therefore, for example, an amount of information related to the future virtual machining phenomenon and the machining quality systematically accumulated in the database 27 can be increased. As a result, the machining quality of the workpiece W ground by the grinding machine 11 can be improved.

### (6. Second Modification)

In the above-described embodiment, the control device 12 of the machine tool outputs the command value PI to the computer device 20. Thus, in synchronization with the control device 12 controlling of the grinding machine 11, the computer device 20 calculates and generates the future virtual machining phenomenon.

In addition, as indicated by a broken line in FIG. 1, for example, a command value output unit 13 to be operated by an operator may be provided. The command value output unit 13 can output the command value PI to the control device 12 such that the command value output unit 13 outputs the command value PI to the computer device 20 in synchronization. Therefore, the operator can output the command value PI to the computer device 20 by operating the command value output unit 13, for example, when it is necessary for the computer device 20 to calculate the future virtual machining phenomenon, such as when whether the machining quality of the workpiece W ground by the grinding machine 11 is good or bad is to be determined.

The present invention is not limited to the above-described embodiment and modifications, and various modifications can be made without departing from the object of the present invention.

For example, in the above-described embodiment, the machine body is the grinding machine 11. However, it is needless to say that the machine body is not limited to the grinding machine 11, and other machine tools, for example, a cutting machine, a lathe, and the like can be adopted.

The present invention may be implemented as a program for causing the computer device 20 to function as the synchronization unit 21, the model creation unit 22, the machining phenomenon calculation unit 23, the difference comparison unit 24, the determination unit 25, the optimal command value determination unit 26, and the machine learning unit 28. Such a program can be recorded and provided on a computer-readable non-transitory recording medium. The computer-readable recording medium includes, for example, an optical storage medium such as a Compact Disc-ROM (CD-ROM), a magnetic recording medium such as a Hard Disk Drive (HDD), and a semiconductor storage medium such as a flash memory. Such a program can also be provided by downloading via a network.

The present application is based on Japanese Patent Application No. 2019-081193 filed on April 22, 2019, and the contents thereof are incorporated herein as reference.

### REFERENCE SIGNS LIST

- 10:: machine tool
- 11:: grinding machine (machine body)
- 111:: grinding wheel
- 112:: grinding wheel head
- 113:: headstock
- 12:: control device
- 13:: command value output unit
- 20:: computer device
- 21:: synchronization unit
- 22:: model creation unit
- 23:: machining phenomenon calculation unit
- 24:: difference comparison unit
- 25:: determination unit
- 26:: optimal command value determination unit
- 27:: database
- 28:: machine learning unit
- W:: workpiece
- PI:: command value
- PH:: stored command value
- PK:: optimal command value

## Claims

1. A cyber-physical system type machining system comprising:
a machine tool disposed in a real world, the machine tool comprising a machine body configured to machine a workpiece and a control device configured to control the machine body based on a command value; and
a computer device configured to generate, in a virtual world, a virtual machining phenomenon corresponding to an actual machining phenomenon with regard to the workpiece and the machine body,
wherein the computer device is connected to communicate with the control device of the machine tool, and the computer device is configured to:
acquire the command value in synchronization with the control device;
generate a future virtual machining phenomenon, which is the virtual machining phenomenon in a future, based on the acquired command value; and
output, to the control device, an optimal command value for correcting the command value based on the future virtual machining phenomenon.

2. The cyber-physical system type machining system according to claim 1,
wherein the computer device is configured to:
generate a current virtual machining phenomenon, which is the virtual machining phenomenon at present, based on the acquired command value; and
generate the future virtual machining phenomenon based on the current virtual machining phenomenon.

3. The cyber-physical system type machining system according to claim 1 or 2,
wherein the computer device comprises:
a synchronization unit configured to synchronize the command value by acquiring the command value at a predetermined cycle;
a machining phenomenon calculation unit configured to generate the future virtual machining phenomenon at any time point later than a synchronization time point at which the synchronization unit synchronizes the command value, by calculation based on the command value; and
an optimal command value determination unit configured to determine the optimal command value based on the future virtual machining phenomenon generated by the machining phenomenon calculation unit and output the determined optimal command value to the control device, and
wherein the control device is configured to acquire the optimal command value output from the optimal command value determination unit, and control the machine body using the acquired optimal command value.

4. The cyber-physical system type machining system according to claim 3,
wherein the machining phenomenon calculation unit is configured to:
generate a current virtual machining phenomenon, which is the virtual machining phenomenon at present, at the synchronization time point; and
generate the future virtual machining phenomenon by calculation based on the current virtual machining phenomenon.

5. The cyber-physical system type machining system according to claim 3 or 4,
wherein the computer device further comprises a difference comparison unit configured to compare a difference between the actual machining phenomenon of the machine body and the current virtual machining phenomenon which is the virtual machining phenomenon at present, and
wherein the synchronization unit is configured to synchronize the command value in a case in which the difference does not satisfy a predetermined reference value as a result of a comparison performed by the difference comparison unit.

6. The cyber-physical system type machining system according to claim 5,
wherein the computer device further comprises a database configured to acquire the command value from the control device and store the command value in an updatable manner,
wherein the machining phenomenon calculation unit is configured to generate the future virtual machining phenomenon based on a stored command value which is the command value stored in the database,
wherein the difference comparison unit is configured to compare a difference between the command value acquired from the control device and the stored command value stored in the database, and
wherein the synchronization unit is configured to synchronize the command value in a case in which the difference does not satisfy a predetermined reference value as a result of the comparison performed by the difference comparison unit.

7. The cyber-physical system type machining system according to any one of claims 3 to 6,
wherein the computer device further comprises a determination unit configured to determine whether the future virtual machining phenomenon calculated by the machining phenomenon calculation unit is a predetermined machining phenomenon set in advance, and
wherein the optimal command value determination unit is configured to, in a case in which the future virtual machining phenomenon is different from the predetermined machining phenomenon as a result of the determination performed by the determination unit, determine the optimal command value and output the optimal command value to the control device.

8. The cyber-physical system type machining system according to any one of claims 3 to 7,
wherein the machine tool further comprises a command value output unit configured to output the command value to the control device such that the command value in synchronization with the computer device.

9. The cyber-physical system type machining system according to any one of claims 3 to 8,
wherein the computer device further comprises a machine learning unit configured to estimate machining quality of the workpiece based on the future virtual machining phenomenon calculated by the machining phenomenon calculation unit, and
wherein the optimal command value determination unit is configured to determine the optimum command value based on the machining quality estimated by the machine learning unit, and output the optimal command value to the control device.

10. The cyber-physical system type machining system according to any one of claims 1 to 9,
wherein the machine body is a grinding machine comprising a grinding wheel, a grinding wheel head which supports the grinding wheel so as to be rotationally driven around an axis, and a headstock which supports the workpiece so as to be rotationally driven around an axis.

11. The cyber-physical system type machining system according to claim 10,
wherein the computer device further comprises a model creation unit configured to create, in a virtual world, a model comprising a virtual grinding wheel corresponding to the grinding wheel, a virtual grinding wheel head corresponding to the grinding wheel head, a virtual headstock corresponding to the headstock, and a virtual workpiece corresponding to the workpiece.

12. The cyber-physical system type machining system according to any one of claims 1 to 11,
wherein the computer device is disposed in a cloud space connected, via a network, to the control device of the machine body disposed in the real world.

13. A computer device configured to generate, in a virtual world, a virtual machining phenomenon corresponding to an actual machining phenomenon in a real world of a workpiece and a machine body of a machine tool for machining the workpiece,
wherein the computer device is connected to communicated with a control device of the machine tool configured to control the machine body based on a command value, and the computer device is configured to:
acquire the command value in synchronization with the control device;
generate a future virtual machining phenomenon, which is the virtual machining phenomenon in a future, based on the acquired command value; and
output, to the control device, an optimal command value for correcting the command value based on the future virtual machining phenomenon.

14. A program for causing a computer device configured to generate, in a virtual world, a virtual machining phenomenon corresponding to an actual machining phenomenon in a real world of a workpiece and a machine body of a machine tool for machining the workpiece, to perform:
processing of communicating with a control device of the machine tool configured to control the machine body based on a command value, and acquiring the command value in synchronization with the control device;
processing of generating a future virtual machining phenomenon, which is the virtual machining phenomenon in a future, based on the acquired command value; and
processing of outputting, to the control device, an optimal command value for correcting the command value based on the future virtual machining phenomenon.

15. A non-transitory computer-readable storage medium storing the program according to claim 14.
